# EUROPÄISCHE PATENTANMELDUNG

(11) **EP 2 926 640 A1**
(43) Veröffentlichungstag der Anmeldung: **07.10.2015**
(21) Anmeldenummer: 14163557.3
(22) Anmeldetag: 04.04.2014
(51) Int. Cl.: A01C 19/02

(54) **Haltemodul zum Halten eines Antriebs für ein Einzelkornsägerät**

(71) Anmelder: Müller-Elektronik GmbH & Co. KG, 33154 Salzkotten (DE)
(72) Erfinder: Schulte, Reinhold, 33106 Paderborn (DE); Müller, Christian, 33142 Büren (DE)
(74) Vertreter: REHBERG HÜPPE + PARTNER

(57) **Zusammenfassung**

Erfindungsgemäß findet ein Haltemodul (1), insbesondere aus einem glasfaserverstärkten Kunststoff, Einsatz, an welchem ein Antrieb (12) gehalten ist. In das Haltemodul (1) ist ein Getriebe integriert, mittels dessen die Antriebsbewegung von dem Antrieb (12) zu einem Einzelkornsägerät (32) übertragen wird. Das Haltemodul (1) stützt sich ausschließlich über einen Kopplungsbereich (28) über eine Drehmomentstütze (37) an einem Tragelement des Säaggregats (31) sowie über einen Kopplungsbereich (27) an der Antriebswelle des Einzelkornsägeräts (32) ab.

## Beschreibung

### TECHNISCHES GEBIET DER ERFINDUNG

Die Erfindung betrifft ein Haltemodul, mittels dessen ein Antrieb für ein Einzelkornsägerät an dem Säaggregat gehalten werden kann. Des Weiteren betrifft die Erfindung die Verwendung eines derartigen Haltemoduls, eine Gruppe von Haltemodulen, eine Antriebseinheit für ein Einzelkornsägerät sowie ein Säaggregat.

### STAND DER TECHNIK

In der Landwirtschaft finden Säaggregate Einsatz, welche über Einzelkornsägeräte verfügen, wie diese beispielsweise in den Druckschriften EP 0 592 995 B1**,** EP 1 415 523 B1**,** WO 2006/092133 A1 und DE 10 2011 002 223 B3 beschrieben sind. Ein Einzelkornsägerät dient dem Vereinzeln von Körnern eines Saatguts und dem Ausbringen der vereinzelten Körner in einer Reihe während der Bewegung des Säaggregats, wobei die Körner in der Reihe mit vorgegebenen (festen oder variablen) Abständen ausgebracht werden sollen. Der Betrieb der Einzelkornsägeräte erfordert einen rotatorischen Antrieb insbesondere einer Säscheibe oder eines Sä-Flügelrads.

Gemäß einem Prospekt der Kverneland Group Deutschland GmbH: "Universelle Einzelkornsämaschine Optima; Optimal für Mais und mehr" kann der Antrieb mehrerer Säaggregate über einen gemeinsamen Antrieb erfolgen, welcher eine Querwelle antreibt. Im Bereich jedes Säaggregats trägt die Querwelle Zahnräder, über welche mittels einer Kette ein Antrieb des zugeordneten Einzelkornsägeräts erfolgt. Alternativ ist in diesem Prospekt ein Antrieb der Einzelkornsägeräte jeweils über einen eigenen Elektromotor beschrieben.

Weiterer Stand der Technik ist insbesondere einem Prospekt der Becker Landtechnik GmbH & Co. KG: "Aeromat; Eco-Line - Farm-Line - Profi-Line - E-motion" sowie einem Produktinformationsblatt "KONZEPT Monoshox ® NG PLUS ME" aus dem November 2013 hinsichtlich einer Produktpräsentation auf der Agritechnica 2013 sowie den folgenden Internet-Seiten:
- http://de.kverneland.com/prodprint/print/67058
- http://www.kongskilde.com/de/de- DE/Agriculture/Soil/Seed%20Drills/Pneumatic%20precision%20Drills/BECKER%20AER OMAT%20E-MOTION

### zu entnehmen.

Für die aus dem Stand der Technik bekannten Lösungen verfügt eine Sämaschine über ein rahmenartiges Tragelement, an welchem die Säaggregate gehalten sind. Hierzu werden im Bereich jedes Säaggregats das zugeordnete Einzelkornsägerät einerseits sowie der Antrieb andererseits an dem Tragelement befestigt, was jeweils durch einen Befestigungsflansch oder ein Verschweißen erfolgt. Für diesen Stand der Technik ist eine Haltevorrichtung zum Halten des Antriebs für das Einzelkornsägerät mit dem genannten rahmenartigen Tragelement gebildet, welcher hierzu über einen geeigneten Anbauträger verfügen kann.

### AUFGABE DER ERFINDUNG

Der Erfindung liegt die Aufgabe zugrunde, ein Haltemodul vorzuschlagen, welches insbesondere
- hinsichtlich der Funktionalität(en) verbessert ist,
- eine Nutzung in Verbindung mit unterschiedlichen Einzelkornsägeräten und/oder Antrieben ermöglicht,
- eine Nachrüstung bestehender Einzelkornsägeräte mit einem elektrischen Antrieb ermöglicht und/oder
- zu einer kompakten Bauweise der mit dem Haltemodul gebildeten Antriebseinheit sowie des hiermit gebildeten Säaggregats führt.

Des Weiteren liegt der Erfindung die Aufgabe zugrunde, eine verbesserte Gruppe von Haltemodulen, eine verbesserte Antriebseinheit und ein verbessertes Säaggregat sowie eine neue Verwendung eines Haltemoduls vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft ein Haltemodul, mittels welchem ein Antrieb für ein Einzelkornsägerät alleinig gehalten werden soll, Hierbei wird im Rahmen der Erfindung unter einem "*alleinigen Halten des Antriebs durch das Haltemoduf"* verstanden, dass der Antrieb nur durch das Haltemodul und nicht durch weitere Haltemaßnahmen gehalten wird. Dabei erfolgt im Rahmen der Erfindung das Halten des Antriebs seitlich von dem Einzelkornsägerät, also nicht koaxial zu diesem.

Während aus dem Stand der Technik bekannte entsprechende Haltemodule als reines Tragelement, insbesondere als Anbauträger des Rahmens, ausgebildet sind, welche somit lediglich einer Funktion dienen sollen, ist erfindungsgemäß das Haltemodul multifunktional ausgebildet, indem in das Haltemodul ein Getriebe integriert ist. Durch diese Multifunktionalität des Haltemoduls ergibt sich beispielsweise eine kompakte Bauweise, unter Umständen mit verringertem Gewicht und verringerten Kosten. Hierbei kann ein Gehäuse des Haltemoduls einerseits die erforderliche Steifigkeit zum Halten des Antriebs, auch unter rauen Einsatzbedingungen, bereitstellen und der Abstützung etwaiger wirkender Momente dienen. Andererseits kann das Gehäuse genutzt werden, um das Getriebe aufzunehmen, Getriebeelemente zu lagern und/oder das Getriebe zu kapseln, was vorteilhaft sein kann für die Aufnahme eines Schmiermittels des Getriebes und/oder für den Schutz des Getriebes gegenüber Verunreinigungen von außen.

Grundsätzlich kann im Rahmen der Erfindung das in das Haltemodul integrierte Getriebe eine beliebige Bauform haben. Bspw. kann das Getriebe als Zahnradgetriebe beliebiger Bauart, als Umschlingungsgetriebe, Kettengetriebe oder Riemengetriebe oder auch als stufenloses Getriebe ausgebildet sein.

Durchaus möglich ist, dass das in das Haltemodul integrierte Getriebe mehrstufig oder als mindestens ein Planetensatz ausgebildet ist, was beispielsweise von Vorteil ist für den Einsatz eines Antriebs in Ausbildung als Gleichstrommotor, welcher u. U. sein Nennmoment in einem Drehzahlbereich zur Verfügung stellt, der eine Übersetzung ins Langsame mit mehreren Getriebestufen erfordert.

Gemäß einem Vorschlag der Erfindung ist das in das Haltemodul integrierte Getriebe allerdings mit einer einzigen Getriebestufe ausgebildet, womit sich eine kompakte Bauweise ergibt und verhältnismäßig geringe Leistungsverluste in dem Getriebe gewährleistet sein können. Hierbei kann das in das Haltemodul integrierte Getriebe mit der einzigen Getriebestufe die einzige Übersetzung zwischen Antrieb und Einzelkornsägerät bereitstellen. Möglich ist allerdings auch, dass außerhalb des Haltemoduls mindestens eine weitere Getriebestufe vorhanden ist.

In weiterer Ausgestaltung des erfindungsgemäßen Haltemoduls ist das Getriebe ein Zahnriementrieb, welcher bei Ausbildung mit einer einzigen Getriebestufe ausschließlich mit einem Antriebs-Zahnriemenrad sowie einem Abtriebs-Zahnriemenrad ausgebildet sein kann. Die Nutzung des Antriebs mittels eines Zahnriemens liegt die Erkenntnis zugrunde, dass die Ansteuerung des Einzelkornsägeräts zur Herbeiführung eines gewünschten Ausbringbilds für die vereinzelten Körner unter Umständen eine definierte Winkelbeziehung zwischen einer Abtriebswelle des Antriebs und der Antriebswelle des Einzelkornsägeräts erfordert, welche durch den Formschluss des Zahnriemens mit den Zahnriemenrädern gewährleistet werden kann. Durchaus möglich ist, dass der Zahnriementrieb mit einem Riemenspanner ausgebildet ist, welcher federbeaufschlagt sein kann und/oder von außen in dem Haltemodul zugänglich und/oder nachstellbar sein kann. Möglich ist aber auch, dass der Zahnriementrieb ohne einen Riemenspanner ausgebildet ist, insbesondere in Ausgestaltung als selbstspannender oder vorgespannter Zahnriementrieb. Diese Ausgestaltung ist unter Umständen dann von Vorteil, wenn ein intermittierender Betrieb des Einzelkornsägeräts und damit des Zahnriementriebs und/oder ein reversierender Betrieb derselben erforderlich ist, beispielsweise mit dem Auftreten eines "Kornklemmers" in dem Einzelkornsägerät. Hier kann sich u. U. die Ausbildung des Zahnriementriebs mit einem Riemenspanner als nachteilig erweisen, da beispielsweise mit dem Reversieren des Antriebs an dem Riemenspanner ein Wechsel von einem Lasttrum zu einem Leertrum und umgekehrt erfolgt, was zur Beeinträchtigung der Funktion führen kann.

In weiterer Ausgestaltung der Erfindung besitzt das Haltemodul einen Kopplungsbereich für den Antrieb. Dieser Kopplungsbereich kann beispielsweise mit einem Flanschbereich ausgebildet sein, mittels dessen ein Gehäuse des Antriebs an das Haltemodul anflanschbar ist. Ergänzend kann der Kopplungsbereich eine Nabe oder Kupplung beliebiger Bauart besitzen, über welche eine Verbindung mit der Abtriebswelle des Antriebs geschaffen werden kann. Beispielsweise kann über den Kopplungsbereich eine drehfeste Verbindung geschaffen werden zwischen der Abtriebswelle des Antriebs und einem Getriebeelement des Getriebes, beispielsweise einem Antriebs-Zahnriemenrad des Zahnriementriebs. Im einfachsten Fall verfügt der Kopplungsbereich über eine Nabe eines derartigen Zahnriemenrads, welche formschlüssig mit der Abtriebswelle des Antriebs verbunden werden kann. Darüber hinaus verfügt für diese Ausgestaltung der Erfindung das Haltemodul über einen Kopplungsbereich für das Einzelkornsägerät. Hier ist es unter Umständen ausreichend, wenn dieser Kopplungsbereich keinerlei Verbindung mit einem Gehäuse des Einzelkornsägeräts ermöglicht (obwohl auch dies denkbar wäre). Möglich ist vielmehr, dass der Kopplungsbereich für das Einzelkornsägerät lediglich eine Nabe oder Kupplung jedweder Art zur Kopplung mit der Antriebswelle des Einzelkornsägeräts besitzt. Hiermit erfolgt dann eine drehfeste Verbindung der Antriebswelle des Einzelkornsägeräts mit einem Getriebeelement des Getriebes des Haltemoduls. Um lediglich ein Beispiel zu nennen, kann ein Abtriebs-Zahnriemenrad eines Zahnriementriebs mit einer Nabe verbunden oder ausgebildet sein, welche drehfest mit der Antriebswelle des Einzelkornsägeräts verbunden werden kann.

Die Möglichkeiten für die Anordnung der genannten Kopplungsbereiche an dem Haltemodul sind vielfältig und beliebig. Durchaus möglich ist hierbei, dass der Kopplungsbereich für den Antrieb einerseits und der Kopplungsbereich für das Einzelkornsägerät andererseits auf unterschiedlichen Seiten des Haltemoduls angeordnet sind. In einer bevorzugten Ausgestaltung der Erfindung sind der Kopplungsbereich für den Antrieb und der Kopplungsbereich für das Einzelkornsägerät von derselben Seite des Haltemoduls zugänglich oder auf derselben Seite des Haltemoduls angeordnet. Dies hat zur Folge, dass, wenn das Haltemodul mit dem Antrieb und das Einzelkornsägerät montiert ist, sich der Antrieb und das Einzelkornsägerät auf derselben Seite des Haltemoduls nebeneinander erstrecken, woraus sich eine insbesondere axial kompakt bauende Ausgestaltung ergibt. Möglich ist, dass bei Anordnung der beiden genannten Kopplungsbereiche auf derselben Seite des Haltemoduls eine Art U gebildet ist, wobei sich das Haltemodul entlang des Grundschenkels des U erstreckt, die Kopplungsbereiche im Übergangsbereich des Grundschenkels des U angeordnet sind und sich die Achse des Antriebs entlang eines Seitenschenkels des U erstreckt, während sich die Achse der Antriebwelle des Einzelkornsägeräts entlang des anderen Seitenschenkels des U erstreckt.

Gemäß einem weiteren Vorschlag der Erfindung besitzt das Haltemodul einen Kopplungsbereich, über welchen eine Kopplung des Haltemoduls mit einem Tragelement des Säaggregats, insbesondere dem Rahmen oder einem an dem Rahmen befestigten Anbauträger, möglich ist. Für die Ausgestaltung dieses Kopplungsbereichs gibt es vielfältige Möglichkeiten. Während durchaus möglich ist, dass über den Kopplungsbereich eine starre Fixierung an dem Tragelement erfolgt, schlägt eine Ausgestaltung der Erfindung vor, dass der Kopplungsbereich eine Kopplung mit dem Tragelement des Säaggregats bereitstellt, bei welcher ein Freiheitsgrad verbleibt. Dieser Freiheitsgrad wird beseitigt durch Kopplung des vorgenannten Kopplungsbereichs für das Einzelkornsägerät mit dem Einzelkornsägerät. Umgekehrt gesagt erfolgt die Kopplung des Haltemoduls mit dem Einzelkornsägerät, indem beispielsweise die drehfeste Verbindung zwischen der Antriebswelle des Einzelkornsägeräts und einem Getriebeelement des Getriebes des Haltemoduls erfolgt. Mit Herstellung dieser drehfesten Verbindung könnte das gesamte Haltemodul noch um die Achse der Eingangswelle des Einzelkornsägeräts rotieren. Diese Rotation wird dann unterbunden, indem der Kopplungsbereich für die Kopplung mit dem Tragelement des Säaggregats genutzt wird. Hierzu muss der Kopplungsbereich für die Kopplung mit dem Tragelement des Säaggregats aber nur geeignet ausgebildet sein, um die vorgenannte unerwünschte Rotation des Haltemoduls um die Achse der Eingangswelle des Säaggregats zu unterbinden, während anderweitige Kräfte oder Momente von diesem Kopplungsbereich nicht aufgenommen werden müssen. Für diese Ausgestaltung kann somit der Kopplungsbereich für die Kopplung mit dem Tragelement des Säaggregats lediglich als eine Art Drehmomentstütze ausgebildet sein.

Für die konkrete Ausgestaltung des Kopplungsbereichs für die Kopplung mit dem Tragelement des Säaggregats gibt es vielfältige Möglichkeiten. Hierbei ist sogar möglich, dass das Haltemodul lediglich über einen Vorsprung oder eine Ausnehmung verfügt, welche einen Formschluss ausbildet mit einem Vorsprung oder einer Ausnehmung des Tragelements des Säaggregats. In einer besonderen Ausgestaltung der Erfindung ist der Kopplungsbereich für die Kopplung mit dem Tragelement des Säaggregats ausschließlich mit einer einzigen Durchgangsbohrung des Gehäuses des Haltemoduls ausgebildet. Durch diese Durchgangsbohrung kann dann ein Stift, Bolzen oder eine Schraube durchgeführt werden, welche/r dann an dem Tragelement des Säaggregats befestigt werden kann. Allein unter Nutzung dieses Kopplungsbereichs des Haltemoduls wäre eine Rotation des Haltemoduls um die durch die Gehäusebohrung vorgegebene Achse noch möglich. Zusätzlich erfolgt aber die Kopplung des Haltemoduls mit dem Einzelkornsägerät, womit eine weitere Abstützung des Haltemoduls erfolgt, aber grundsätzlich eine Rotation des Haltemoduls um die durch die Eingangswelle des Einzelkornsägeräts vorgegebene Achse möglich wäre. Da die Achse der Gehäusebohrung einerseits und die Achse der Eingangswelle des Einzelkornsägeräts andererseits zueinander versetzt sind, ist insgesamt eine Fixierung des Haltemoduls gewährleistet.

Für eine alternative konstruktive Ausgestaltung ist der Kopplungsbereich für die Kopplung mit dem Tragelement des Säaggregats als gegenüber einem Gehäuse des Haltemoduls verschwenkbare Strebe ausgebildet. Diese verschwenkbare Strebe ermöglicht u. U. eine gewisse Flexibilisierung bei der Montage des Haltemoduls. Durchaus möglich ist auch, dass über die Strebe und deren Schwenk-Freiheitsgrad ein Toleranzausgleich ermöglicht ist, welcher für die Montage genutzt werden kann und/oder genutzt werden kann, wenn sich kein exakter Rundlauf der Eingangswelle des Einzelkornsäaggregats oder der hiermit verbundenen Kopplungsbereiche gegeben ist. Von der Strebe ist bevorzugt ein Endbereich an dem Gehäuse des Haltemoduls befestigt, während der andere Endbereich der Strebe an dem Tragelement des Säaggregats befestigt sein kann.

Eine Erweiterung der Möglichkeiten für die Montage und den Toleranzausgleich kann erfolgen, wenn das Tragelement weitere Freiheitsgrade bereitstellt, beispielsweise hinsichtlich seiner Länge veränderlich ist, eine einstellbare Befestigung im Bereich von Länglöchern erfolgt o. ä.

Die Dimensionen des Haltemoduls in jede Richtung können entsprechend den jeweiligen Anforderungen beliebig sein. In einer besonderen erfindungsgemäßen Ausgestaltung des Haltemoduls besitzt dieses eine Tiefe, die kleiner ist als 40 mm, beispielsweise kleiner als 38 oder 36 mm. Hierbei wird unter einer "Tiefe" die Erstreckung des Haltemoduls in eine Richtung verstanden, welche parallel zu der Achse einer Eingangswelle des Säaggregats und zu der Achse einer Ausgangswelle des Antriebs orientiert ist. Für diese Ausgestaltung der Erfindung ergibt sich eine besonders kleine Baugröße mit dem Antrieb, dem Haltemodul und dem Einzelkornsägeräts gebildeten Säaggregats in Richtung der vorgenannten Achsen.

Insbesondere für den Fall, dass der Antrieb, das Haltemodul und das Einzelkornsägerät wie zuvor erläutert U-förmig angeordnet sind, besitzen gemäß einem weiteren Vorschlag der Erfindung der Kopplungsbereich für den Antrieb und der Kopplungsbereich für das Einzelkornsägerät, insbesondere die Achsen der zugeordneten Getriebeelemente, einen Abstand, der größer ist als die Summe aus
- dem Abstand der Achse einer Abtriebswelle des Antriebs von einer Außenkontur eines Gehäuses des Antriebs und
- dem Abstand der Achse einer Antriebswelle des Einzelkornsägeräts von einem Gehäuse des Einzelkornsägeräts.

Für diese Dimensionierung des Abstands können sich der Antrieb und das Einzelkornsägerät (also die Seitenschenkel des U) nebeneinander erstrecken, während die Übertragung der Antriebsbewegung "vor" diesen erfolgt (also im Bereich des Grundschenkels des U).

Ein weiterer Vorschlag der Erfindung widmet sich der Verwendung des Haltemoduls für unterschiedliche Antriebe und/oder unterschiedliche Einzelkornsägeräte. Möglich ist hierbei, dass die Kopplungsbereiche für den Antrieb und das Einzelkornsägerät spezifisch auf einen, unter Umständen genormten Antrieb und/oder ein besonderes Einzelkornsägerät, einen Typ desselben oder ein Produkt eines Herstellers angepasst sind. Um den Betrieb des Haltemoduls auch mit unterschiedlichen Antrieben und/oder Einzelkornsägeräten zu ermöglichen, schlägt die Erfindung vor, dass in dem Kopplungsbereich für den Antrieb und/oder dem Kopplungsbereich für das Einzelkornsägerät ein Adapter Einsatz findet. Mittels des Adapters ist einen Anpassung des Kopplungsbereichs an den hiermit zu koppelnden Antrieb bzw. das hiermit zu koppelnde Einzelkornsägerät möglich. Um beispielsweise Haltemodule grundsätzlich gleicher Bauart für die Nutzung mit unterschiedlichen Antrieben zu verwenden, kann ein gleiches Getriebeelement der Haltemodule mit unterschiedlichen Adaptern drehfest gekoppelt sein, wobei die Adapter jeweils spezifisch ausgebildet sind für den jeweils anzukoppelnden Antrieb. Das Entsprechende gilt für die Kopplung des Haltemoduls mit unterschiedlichen Einzelkornsägeräten.

Grundsätzlich kann das erfindungsgemäße Haltemodul mit einem Gehäuse aus einem beliebigen Material und mit Herstellung in einem beliebigen Herstellungsverfahren, beispielsweise aus einem gegossenen Gehäuse aus Eisen oder Aluminium, gebildet sein. In bevorzugter Ausgestaltung ist das Gehäuse des Haltemoduls aber aus einem Kunststoff hergestellt, was vorteilhaft hinsichtlich der Kosten, des Gewichts und eines möglicherweise einsetzbaren Spritzgießverfahrens sein kann. Hierbei haben die der Erfindung zugrundeliegenden Untersuchungen aber zu dem Ergebnis geführt, dass die Nutzung eines "einfachen Kunststoffs" für die Gehäuse des Haltemoduls nicht ausreichend ist, da dann die erforderlichen Haltekräfte in rauen Einsatzbedingungen nicht gewährleistet werden können. Aus diesem Grund schlägt die Erfindung vor, dass das Gehäuse des Haltemoduls aus einem *verstärkten* Kunststoff hergestellt ist. Dies Verstärkung kann auf unterschiedliche Weise gebildet sein: Möglich ist, dass das Gehäuse sogenannten Inlays oder Inserts besitzt, was insbesondere im Bereich der Kopplungsbereiche, der Lagerstellen für die Getriebeelemente und/oder im Bereich der Drehmomentstütze oder der Gehäusebohrung der Fall ist. Um lediglich ein Beispiel zu nennen, können derartige Inserts mit von dem Kunststoff umspritzten metallischen Hülsen gebildet sein. Alternativ oder kumulativ kann der Kunststoff faserverstärkt sein, um im Bereich des gesamten Gehäuses oder in besonders beanspruchten Bereichen des Gehäuses die erforderliche Steifigkeit bereitzustellen. Vorzugsweise findet für das Gehäuse des Haltemoduls ein glasfaserverstärkter Kunststoff Einsatz.

Eine weitere Lösung der der Erfindung zugrundeliegenden Aufgabe ist gegeben durch Verwendung eines Haltemoduls der zuvor erläuterten Art, um einen Antrieb für ein Einzelkornsägerät seitlich von dem Einzelkornsägerät zu halten, insbesondere unter axialer Überdeckung des Einzelkornsägeräts und des Antriebs.

Eine weitere Lösung der der Erfindung zugrundeliegenden Aufgabe widmet sich der Fertigung von Haltemodulen für unterschiedliche Einsatzzwecke mit einem hohen Gleichanteil: Für diesen Vorschlag der Erfindung wird eine Gruppe von Haltemodulen hergestellt, angeboten und vertrieben, bei welcher die Haltemodule dasselbe Gehäuse aufweisen. Dennoch können die Haltemodule dieser Gruppe mit unterschiedlichen Typen von Einzelkornsägeräten gekoppelt werden. Dies wird erfindungsgemäß gewährleistet, indem Haltemodule einer ersten Teilgruppe eine erste Anschlussgeometrie besitzen, die spezifisch ist für einen ersten Antrieb oder für ein erstes Einzelkornsägerät. Hingegen sind Haltemodule einer zweiten Teilgruppe mit einer zweiten Anschlussgeometrie ausgestattet, welche von der ersten Anschlussgeometrie abweicht und welche spezifisch ist für eine Kopplung mit einem zweiten Antrieb oder einem zweiten Einzelkornsägerät. Diese unterschiedlichen Anschlussgeometrien können durch Verwendung unterschiedlicher Kopplungsbereiche, Getriebeelemente, Naben und/oder Adapter in den Haltemodulen der unterschiedlichen Teilgruppen gewährleistet werden.

Alternativ oder kumulativ möglich ist, dass bei Verwendung der Haltemodule für unterschiedliche Typen von Antrieben und/oder Einzelkornsägeräten unterschiedliche Übersetzungen erforderlich sind. Um auch für diese Anforderung eine Fertigung mit einem hohen Gleichanteil zu ermöglichen, schlägt die Erfindung vor, eine Gruppe von Haltemodulen herzustellen, anzubieten und zu vertreiben, bei welchen sämtliche Haltemodule mit demselben Gehäuse ausgebildet sind. Allerdings unterscheiden sich dann Haltemodule einer ersten Teilgruppe von solchen einer zweiten Teilgruppe durch die darin angeordneten Getriebe: Die Getriebe der ersten Teilgruppe besitzen eine erste Übersetzung, während die Getriebe der zweiten Teilgruppe eine zweite Übersetzung besitzen, welche von der ersten Übersetzung abweicht. Somit können mit Haltemodulen mit denselben Gehäusen die erforderlichen unterschiedlichen Übersetzungen gewährleistet werden. Für den Einsatz eines Zahnriementriebs als Getriebe kann die Anpassung der Übersetzung durch die Wahl der Durchmesser der Zahnriemenräder erfolgen.

Eine weitere Lösung der der Erfindung zugrundeliegenden Aufgabe ist gegeben durch eine Antriebseinheit, in welcher ein Haltemodul der zuvor erläuterten Art mit einem elektrischen Antrieb gebildet ist. Vorzugsweise bilden das Haltemodul und der elektrische Antrieb eine Art L, wobei der Grundschenkel des L von dem Haltemodul gebildet ist, während der Seitenschenkel des L mit dem elektrischen Antrieb gebildet ist.

Die Lösung der der Erfindung zugrundeliegenden Aufgabe kann auch mit einem Säaggregat erfolgen, welches mit einem Einzelkornsägerät sowie einer Antriebseinheit der zuvor erläuterten Art (also der Kombination eines Haltemoduls mit einem elektrischen Antrieb) gebildet ist. Hierbei steht die Antriebseinheit mit dem Einzelkornsägerät in Antriebsverbindung.

Vorzugsweise ist bei diesem Säaggregat der Antrieb ausschließlich durch das Haltemodul gehalten und somit "frei schwebend" angeordnet sowie nicht unmittelbar selbst an einem anderen Tragelement als dem Haltemodul gehalten. Hierbei erstreckt sich der Antrieb vorzugsweise seitlich von dem Einzelkornsägerät. Das Haltemodul ist lediglich in einem Kopplungsbereich an dem Einzelkornsägerät, nämlich vorzugsweise ausschließlich an der Eingangswelle des Einzelkornsägeräts, abgestützt sowie in dem weiteren Kopplungsbereich an dem Tragelement des Säaggregats, insbesondere im Bereich der Drehmomentstütze, der Gehäusebohrung oder der verschwenkbaren Strebe, abgestützt, ohne dass zusätzliche Abstützorte vorhanden sind.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Vertikalschnitt durch eine erfindungsgemäße Antriebseinheit.
- **Fig. 2**: zeigt einen Schnitt II-II durch die Antriebseinheit gemäß Fig. 1.
- **Fig. 3**: zeigt die Antriebseinheit gemäß Fig. 1 und 2 in einer räumlichen Darstellung, hier mit einem Kopplungsbereich für ein Einzelkornsägerät ohne Adapter.
- **Fig. 4**: zeigt die Antriebseinheit gemäß Fig. 1 und 2 in einer räumlichen Darstellung, hier mit einem Kopplungsbereich für ein Einzelkornsägerät mit Adapter.
- **Fig. 5**: zeigt ein erfindungsgemäßes Säaggregat in räumlicher Darstellung mit einer Drehmomentstütze, welche von einer eine Durchgangsbohrung des Haltemoduls durchsetzenden Schraube gebildet ist.
- **Fig. 6**: zeigt ein erfindungsgemäßes Säaggregat in räumlicher Darstellung mit einer Drehmomentstütze, welche mit einer verschwenkbaren Strebe gebildet ist.

### FIGURENBESCHREIBUNG

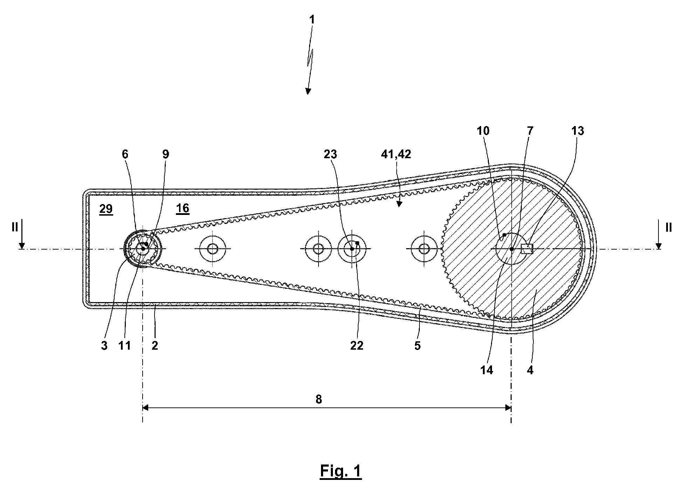

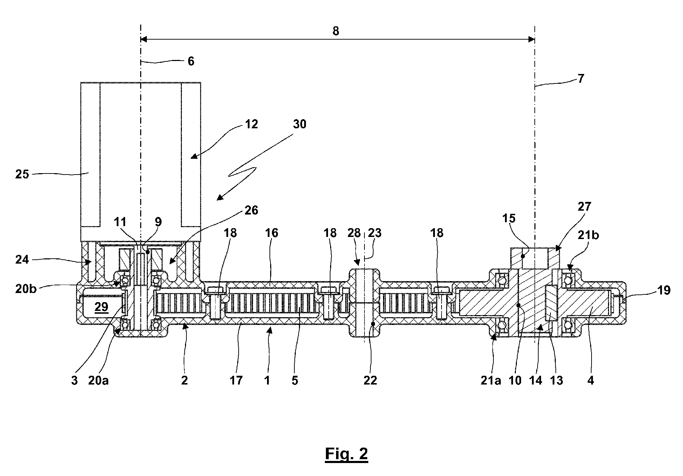

**Fig. 1** zeigt ein Haltemodul 1, welches in dem Vertikalschnitt gemäß Fig. 1 länglich ausgebildet ist. In dem Gehäuse 2 sind ein Antriebs-Zahnriemenrad 3 sowie ein Abtriebs-Zahnriemenrad 4 angeordnet, welche über einen Zahnriemen 5 miteinander in Antriebsverbindung stehen. Das Antriebs-Zahnriemenrad 3 sowie das Abtriebs-Zahnriemenrad 4 sind gegenüber dem Gehäuse 2 drehbar gelagert um Achsen 6, 7, welche parallel zueinander und vertikal zur Zeichenebene gemäß Fig. 1 orientiert sind und einen Abstand 8 aufweisen. Das Antriebs-Zahnriemenrad 3 sowie das Abtriebs-Zahnriemenrad 4 bilden jeweils Naben 9, 10 aus. Über die Nabe 9 des Antriebs-Zahnriemenrads 3 ist das Antriebs-Zahnriemenrad 3 mit einer Abtriebswelle 11 eines elektrischen Antriebs 12 gekoppelt (vgl. Fig. 2). Für das dargestellte Ausführungsbeispiel ist zwischen der Abtriebswelle 11 des Antriebs 12 und der Nabe 10 des Antriebs-Zahnriemenrads 3 eine drehfeste Verbindung über eine Passfeder geschaffen. Hingegen ist in der Nabe 10 des Abtriebs-Zahnriemenrads 4 über eine Passfeder 13 ein Adapter 14 drehfest gehalten, welcher wiederum eine Nabe 15 ausbildet, deren Geometrie und insbesondere Durchmesser abweichend zu der Nabe 10 ausgebildet ist. Die Nabe 15 ermöglicht eine drehfeste Kopplung mit einer Antriebswelle eines Einzelkornsägeräts. Im Rahmen der Erfindung kann jede beliebige anderweitige Kopplung des Antriebs- und/oder Abtriebs-Zahnriemenrads 3, 4 mit der Abtriebswelle 11 des Antriebs 12 und/oder der Antriebswelle des Einzelkornsägeräts erfolgen mit Einsatz beliebiger Verbindungen, Kupplungen, Naben oder Adapter.

In **Fig. 2** ist zu erkennen, dass das Gehäuse 2 mit zwei Halbschalen 16, 17 mit mittiger Trennungsebene gebildet ist. Die beiden Halbschalen 16, 17 sind über Gehäuseschrauben 18 miteinander verschraubt. Das Gehäuse 2 ist abgedichtet durch Anordnung eines Dichtelements 19 oder einer Dichtmasse im Kontaktbereich der Halbschalen 16, 17 miteinander. Das Antriebs-Zahnriemenrad 3 und das Abtriebs-Zahnriemenrad 4 sind in an sich bekannter Weise über Wälzlager 20a, 20b sowie 21 a, 21 b gegenüber beiden Halbschalen 16, 17 des Gehäuses drehbar um die Achsen 6, 7 gelagert.

Ungefährt mittig zwischen den beiden Achsen 6, 7 durchsetzt eine Durchgangsbohrung 22 beide Halbschalen 16, 17. Die Durchgangsbohrung 22 gibt eine Achse 23 vor, welche parallel zu den Achsen 6, 7 orientiert ist. Möglich ist, dass die beiden Halbschalen 16, 17 im Bereich der Durchgangsbohrung 22 gegeneinander abgedichtet sind, so dass das Innere des Gehäuses 2 gegenüber der Durchgangsbohrung 22 abgedichtet ist.

In ganz grober Näherung verfügt das Haltemodul 1 in dem in Fig. 1 dargestellten Vertikalschnitt über eine rechteckige Grundform, wobei der linke Endbereich der Außengeometrie des Antriebs 12 angepasst ist, während der rechte Endbereich derart abgerundet ist, dass die Außenkontur des Gehäuses 2 hier der Außenkontur des Abtriebs-Zahnriemenrads 4 unter Ausbildung eines geringen radialen Spalts folgt. In Fig. 2 ist zu erkennen, dass das Gehäuse 2 für die Kopplung mit dem Antrieb 12 einen Flanschbereich 24 ausbildet, im Bereich dessen ein Gehäuse 25 des Antriebs 12 an das Haltemodul 11 angeflanscht werden kann.

Vorzugsweise ist das Haltemodul 1 ausschließlich über drei Kopplungsbereiche 26, 27, 28 mit weiteren Bauelementen gekoppelt:
- Der Kopplungsbereich 26 dient der Kopplung des Haltemoduls 1 mit dem Antrieb 12. Hierzu verfügt der Kopplungsbereich einerseits über den Flanschbereich 24, über welchen das Gehäuse 25 des Antriebs 12 an dem Gehäuse 2 des Haltemoduls 1 befestigt werden kann. Andererseits erfolgt in dem Kopplungsbereich 26 die drehfeste Verbinddung der Abtriebswelle 11 des Antriebs 12 mit der Nabe 9. Möglich ist, dass diese drehfeste Verbindung im Inneren des Haltemoduls 1 erfolgt, so dass sich die Abtriebswelle 11 in das Innere des Haltemoduls 1 erstreckt, oder sich ein Adapter 14 oder die Nabe 9 aus dem Gehäuse 2 heraus erstrecken, so dass die drehfeste Verbindung außerhalb des Gehäuses 3 angeordnet ist.
- In dem Kopplungsbereich 27 erfolgt die Kopplung des Haltemoduls, hier des Abtriebs-Zahnriemenrads 4, mit dem Einzelkornsägerät, hier einer Antriebswelle des Einzelkornsägeräts. Ein zusätzliches Anflanschen insbesondere eines Gehäuses des Einzelkornsägeräts an dem Gehäuse 2 des Haltemoduls 1 erfolgt in dem Kopplungsbereich 27 hingegen nicht.
- Schließlich dient der Kopplungsbereich 28 der Kopplung des Haltemoduls 1 mit einem Tragelement des Rahmens oder einem an dem Rahmen befestigten Tragelement des Säaggregats.

Wie in Fig. 2 ersichtlich ist, bildet
- die Achse 6 des Antriebs-Zahnriemenrads 3 sowie des Antriebs 12,
- das Haltemodul 1 und
- die Achse 7 des Abtriebs-Zahnriemenrads 4 und der Eingangswelle des Einzelkornsägeräts
ein U, wobei das Haltemodul 1 den Grundschenkel des U bildet, während die Achsen 6, 7 die Seitenschenkel des U bilden.

Im Rahmen der Erfindung wird unter einer "Übersetzung" eine Übersetzung der Drehzahlverhältnisse ins Schnelle, ins Langsame oder auf eine unveränderte Übertragung einer Drehzahl verstanden. Für die Wahl der Dimensionen des Antriebs-Zahnriemenrads 3 und des Abtriebs-Zahnriemenrads 4 gemäß Fig. 1 erfolgt eine Übersetzung ins Langsame mit einer Übersetzung L:1, wobei L im Bereich zwischen 3,0 und 8,0 (beispielsweise zwischen 4,0 und 5,0) liegen kann.

Für das Gehäuse 2 findet vorzugsweise ein Material PA6 GF30 Einsatz, wobei das Antriebs-Zahnriemenrad 3 und das Abtriebs-Zahnriemenrad 4 aus Aluminium hergestellt sein können. Für den Zahnriemen 5 findet ein mit einem Elastomer beschichtetes Nylongewebe Einsatz, wobei in diesem Glasfasern vorhanden sein können. Für die Wälzlager 20, 21 finden vorzugsweise beidseitig abgedichtete Kugellager Einsatz.

Für das dargestellte Ausführungsbeispiel ist die Tiefe des Haltemoduls 1, also die Erstreckung in Richtung der Achsen 6, 7, 23, in dem Kopplungsbereich 26 infolge der Ausbildung des Flanschbereichs 24 vergrößert. Dies ist nicht zwingend der Fall. Vielmehr kann ein Anflanschen des Antriebs 12 auch ohne derartig vergrößerte Tiefe des Gehäuses 2 erfolgen, bspw. indem Flanschschrauben das Gehäuse 2 in dem Kopplungsbereich 27 in einem Freibereich 29 seitlich von dem Antriebs-Zahnriemenrad 3 durchsetzen, welche mit dem Gehäuse 25 des Antriebs 12 verschraubt werden.

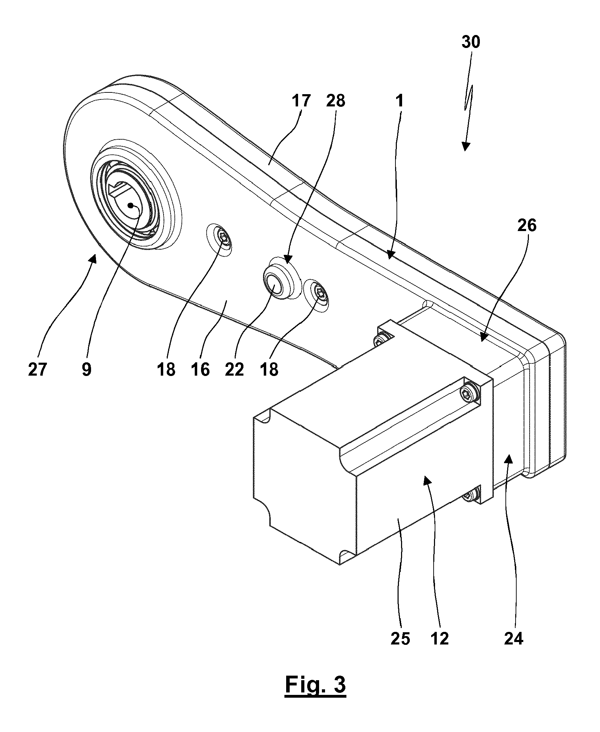

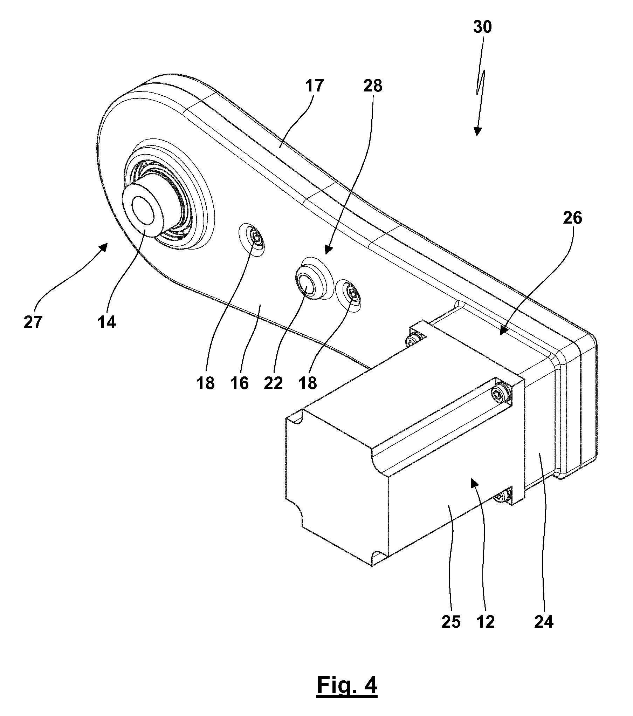

Mit dem Antrieb 12 und dem Haltemodul 1 ist in montiertem Zustand eine Antriebseinheit 30 gebildet, welche in den **Fig. 3** **und** **4** räumlich dargestellt ist und L-förmig ausgebildet ist, wobei der Grundschenkel des L mit dem Haltemodul 1 gebildet ist, während der Seitenschenkel mit dem Antrieb 12 gebildet ist. Hierbei zeigt Fig. 3 eine Antriebseinheit 30, welche ohne einen Adapter 14 ausgebildet ist, während gemäß Fig. 4 in die Nabe 9 ein Adapter 14 eingesetzt ist. Somit können die Haltemodule 1 durch Verwendung unterschiedlicher Adapter 14 spezifisch für den Antrieb unterschiedlicher Typen von Einzelkornsägeräten ausgebildet werden.

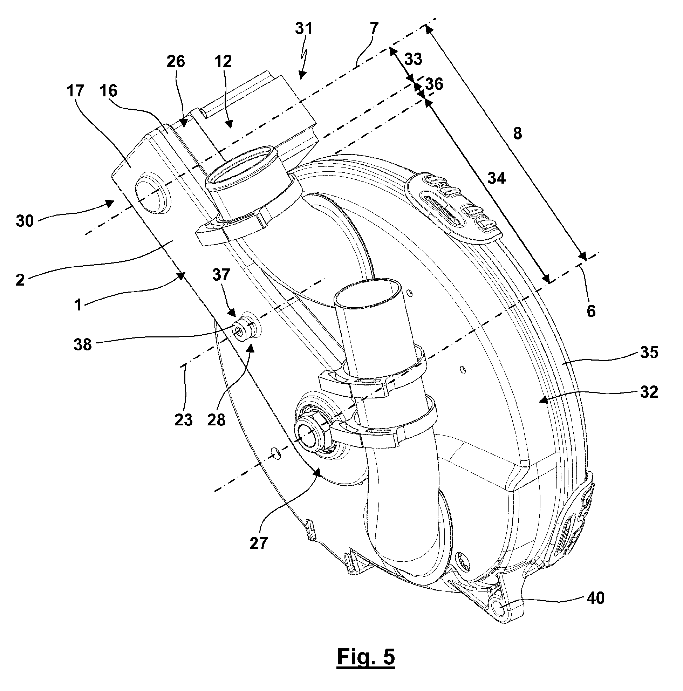

**Fig. 5** zeigt in einer räumlichen Darstellung ein Teilbereich eines Säaggregat 31, in welchem ein Einzelkornsägerät 32 von einer Antriebseinheit 30, welche mit dem Haltemodul 1 und dem Antrieb 12 gebildet ist, angetrieben wird. Zu erkennen ist hier, dass der Abstand 8 der Achsen 6, 7 größer ist als die Summe
- eines Abstands 33 der Abtriebswelle 11 des Antriebs 12 von der Außenkontur des Gehäuses 25 des Antriebs 12 und
- eines Abstands 34 von der Außenkontur eines Gehäuses 35 des Einzelkornsägeräts 32,
wobei hier die einander zugewandten Bereiche der Außenkonturen relevant sind. Hierdurch ergibt sich zwischen dem Antrieb 12 und dem Einzelkornsägerät 32 ein Spalt 36 und es ist möglich, dass sich der Antrieb 12 (hinsichtlich der Achsen 6, 7) lateral von dem Einzelkornsägerät 32 befindet mit zumindest teilweiser axialer Überdeckung des Antriebs 12 mit dem Einzelkornsägerät 32, wodurch sich eine kompakte Anordnung ergibt.

Ist der Antrieb 12 über den Kopplungsbereich 26 mit dem Haltemodul 1 gekoppelt und erfolgt die Kopplung des Haltemoduls 1 bestimmungsgemäß im Kopplungsbereich 27 mit dem Einzelkornsägerät 32, können sich das Haltemodul 1 und der Antrieb 12 noch um die Achse 6 drehen. Diese Drehung wird verhindert durch eine Drehmomentstütze 37. Die Drehmomentstütze 37 ist gebildet mit einer Schraube 38, welche sich durch die Durchgangsbohrung 22 des Haltemoduls 1 hindurch erstreckt und (in den Figuren nicht dargestellt) mit einem Tragelement (insbesondere der Rahmen) des Säaggregats verschraubt ist. Erst durch kumulative Nutzung der Kopplungsbereiche 27, 28 ist das Haltemodul 1 und damit der Antrieb 12 befestigt und fixiert.

Erfolgt lediglich die Kopplung im Kopplungsbereich 28, könnte sich das Haltemodul 1 noch um die Achse 23 drehen, während die Verdrehung um die Achse 23 verhindert ist durch die Kopplung in dem Kopplungsbereich 27.

In Fig. 5 wird eine anderweitige Kopplung zwischen der Eingangswelle des Einzelkornsägeräts 32 und dem Abtriebs-Zahnriemenrad 4 im Kopplungsbereich 27 gewählt, nämlich eine Verschraubung einer Welle-Nabe-Verbindung mit einer Wellenmutter.

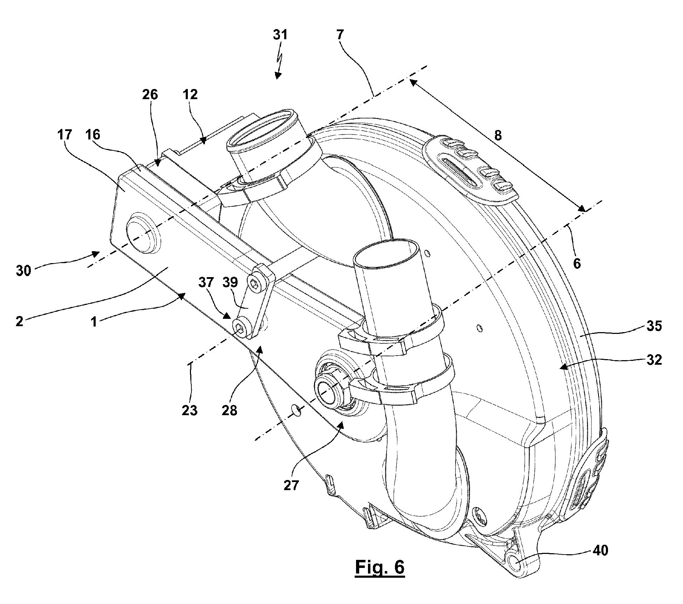

Für die abgewandelte Ausführungsform gemäß **Fig. 6** findet (bei ansonsten entsprechender Ausgestaltung) eine Drehmomentstütze 37 Einsatz, welche mit einer Strebe 39 gebildet ist. Die Strebe 39 ist in einem Endbereich verschwenkbar um die Achse 23 der Durchgangsbohrung 22 an dem Haltemodul 1 angelenkt. In dem anderen Endbereich ist die Strebe 39 ebenfalls verschwenkbar an einem an dem Trageelement des Säaggregats abgestützten Bolzen angelenkt. Durchaus möglich ist aber auch, dass durch Anziehen der Schrauben in den Endbereichen der Strebe 39 ein Schwenk-Freiheitsgrad nach einer Montage und Ausrichtung des Haltemoduls 1 beseitigt ist. Das Gehäuse 35 des Einzelkornsägeräts 32 verfügt über einen Befestigungsflansch 40, über welchen das Einzelkornsägerät 32 ebenfalls an dem hier nicht dargestellten Tragelement des Säaggregats befestigt ist.

In Fig. 5 und 6 ist zu erkennen, dass der Antrieb 12 ausschließlich über das Haltemodul 1 gehalten ist und insbesondere nicht an dem Tragelement des Säaggregats 31 und an dem Gehäuse 35 des Einzelkornsägeräts 32 abgestützt ist. Die erfindungsgemäße Ausgestaltung ermöglicht eine Montage des Haltemoduls 1 mit dem daran befestigten Antrieb 12 in beliebiger Winkelstellung um die Achse 6, sofern für die Drehmomentstütze 37 ein entsprechender Anlenkpunkt oder Befestigungsort an dem Tragelement des Säaggregats vorgesehen ist. Des Weiteren zu erkennen ist, dass dasselbe Haltemodul 1 mit demselben Antrieb 12 Einsatz finden kann für Einzelkornsägeräte 32 auch unterschiedlicher Abmessungen. Eine Anpassung an unterschiedliche Wellen oder Naben unterschiedlicher Antriebe 12 und/oder Einzelkornsägeräte 32 ist durch Verwendung unterschiedlicher Naben 9, 10 und/oder Adapter 14 ohne großen Aufwand möglich. Es versteht sich, dass die Kopplung des Haltemoduls 1 mit dem Einzelkornsägerät 32 oder dem Antrieb 12 nicht nur über eine hiervon bereitgestellte Nabe erfolgen kann, sondern vielmehr auch über eine mit einem Zahnriemenrad 3, 4 drehfest verbundene Welle, welche dann Aufnahme findet in einer Nabe des Antriebs 12 oder des Einzelkornsägeräts 32.

Mit dem Antriebs-Zahnriemenrad 3, dem Abtriebs-Zahnriemenrad 4 und dem Zahnriemen 5 ist ein Getriebe 41 gebildet, welches hier als Zahnriementrieb 42 ausgebildet ist.

Bei Verwendung desselben Gehäuses können durch den Einsatz von Antriebs- und/oder Abtriebs-Zahnriemenrädern 3, 4 unterschiedlicher Durchmesser unterschiedliche Übersetzungsverhältnisse je nach Bedarf erzeugt werden.

Möglich ist, dass in das Gehäuse 2 des Haltemoduls 1 weitere Bauelemente integriert sein können. Um lediglich ein nicht beschränkendes Beispiel zu nennen kann eine Steuereinheit in das Gehäuse integriert sein, insbesondere zur Steuerung oder Regelung des Antriebs 12, des Säaggregats 31 oder des Einzelkornsägeräts 32. In diesem Fall kann das Gehäuse Anschlüsse oder Stecker für eine elektische Leistungsversorgung, ein Bussystem, Sensorleitungen und/oder Steuerleitungen aufweisen. Möglich ist auch, dass mit der Montage des Antriebs 12 mit dem Haltemodul 1 in dem Kopplungsbereich 26 eine automatische elektrische Verbindung für eine Versorgungsleitung, Sensorleitung und/oder Steuerleitung zwischen dem Antrieb 12 und dem Haltemodul 1 geschaffen wird.

Im Rahmen der Erfindung wird unter einer "Steuerung" auch eine Reglung verstanden.

Unter einer "Sämaschine" wird insbesondere die gesamte über das Feld gezogene Einheit verstanden, welche ein Tragelement, inbesondere einen Rahmen, besitzt, an dem nebeneinander mehrere Säaggregate gehalten sind. Hierbei bezeichnet ein "*Säaggregat*" insbesondere eine Teileinheit der Sämaschine, welche dem Ausbringen von Saatgut in einer Teilbreite oder mindestens einer Reihe dient. Ein derartiges Säaggregat kann bspw. mit einem Vorratsbehälter für das Saatgut, einem Einzelkornsägerät, einem Bodenbearbeitungsgerät und/oder einem Dosiergerät zum Ausbringen von Dünger u. ä. gebildet sein. Schließlich ist ein "*Einzelkornsägerät"* vorzugsweise das Gerät des Säaggregats, welches für das Vereinzeln und/oder Ausbringen des Saatguts auf das Feld dient und von einem Antrieb angetrieben ist. Der Begriff Einzelkornsägerät umfasst dabei auch ein so genannten "Säherz". Ein "Vereinzeln" (oder "Einzelkorn...") betrifft nicht nur die Abtrennung eines einzelnen Korns (oder ein "einzelnes Korn"), sondern vielmehr auch das Abtrennen einer Gruppe von Körner kleiner Anzahl.

Vorzugsweise findet als Antrieb 12 ein Schrittmotor Einsatz.

### BEZUGSZEICHENLISTE

- 1: Haltemodul
- 2: Gehäuse
- 3: Antriebs-Zahnriemenrad
- 4: Abtriebs-Zahnriemenrad
- 5: Zahnriemen
- 6: Achse
- 7: Achse
- 8: Abstand
- 9: Nabe
- 10: Nabe
- 11: Abtriebswelle
- 12: elektrischer Antrieb
- 13: Passfeder
- 14: Adapter
- 15: Nabe
- 16: Halbschale
- 17: Halbschale
- 18: Gehäuseschraube
- 19: Dichtelement
- 20: Wälzlager
- 21: Wälzlager
- 22: Durchgangsbohrung
- 23: Achse
- 24: Flanschbereich
- 25: Gehäuse (Antrieb)
- 26: Kopplungsbereich (Antrieb)
- 27: Kopplungsbereich (Einzelkornsägerät)
- 28: Kopplungsbereich (Tragelement)
- 29: Freibereich
- 30: Antriebseinheit
- 31: Säaggregat
- 32: Einzelkornsägerät
- 33: Abstand
- 34: Abstand
- 35: Gehäuse (Einzelkornsägerät)
- 36: Spalt
- 37: Drehmomentstütze
- 38: Schraube
- 39: Strebe
- 40: Flanschbereich
- 41: Getriebe
- 42: Zahnriementrieb

## Patentansprüche

1. Haltemodul (1) zum alleinigen Halten eines Antriebs (12) für ein Einzelkornsägerät (32) seitlich von dem Einzelkornsägerät (32), **dadurch gekennzeichnet, dass** in das Haltemodul (1) ein Getriebe (41) integriert ist.

2. Haltemodul (1) nach Anspruch 1, **dadurch gekennzeichnet, dass** das Getriebe (41) mit einer einzigen Getriebestufe ausgebildet ist.

3. Haltemodul (1) nach Anspruch 1 oder 2, **dadurch gekennzeichnet, dass** das Getriebe (41) mit einem Zahnriementrieb (42) ausgebildet ist.

4. Haltemodul (1) nach einem der vorhergehenden Ansprüche, **dadurch gekennzeichnet, dass** das Haltemodul (1)
a) einen Kopplungsbereich (26) für den Antrieb (12) sowie
b) einen Kopplungsbereich (27) für das Einzelkornsägerät (32)
besitzt.

5. Haltemodul (1) nach Anspruch 4, **dadurch gekennzeichnet, dass** der Kopplungsbereich (26) für den Antrieb (12) und der Kopplungsbereich (27) für das Einzelkornsägerät (32) von derselben Seite des Haltemoduls (1) zugänglich sind.

6. Haltemodul (1) nach einem der vorhergehenden Ansprüche, **dadurch gekennzeichnet, dass** das Haltemodul (1) einen Kopplungsbereich (28) für die Kopplung mit einem Tragelement eines Säaggregats (31) besitzt.

7. Haltemodul (1) nach einem der vorhergehenden Ansprüche, **dadurch gekennzeichnet, dass** der Kopplungsbereich (28) für die Kopplung mit dem Tragelement des Säaggregats (31) eine Kopplung mit einem verbleibenden Freiheitsgrad bereitstellt, welcher beseitigt ist, wenn der Kopplungsbereich (27) für das Einzelkornsägerät (32) mit dem Einzelkornsägerät (32) gekoppelt ist.

8. Haltemodul (1) nach einem der Ansprüche 6 und 7, **dadurch gekennzeichnet, dass** der Kopplungsbereich (28) für die Kopplung mit dem Tragelement des Säaggregats (31) als Drehmomentstütze (37) ausgebildet ist.

9. Haltemodul (1) nach Anspruch 8, **dadurch gekennzeichnet, dass** der Kopplungsbereich (28) für die Kopplung mit dem Tragelement des Säaggregats (31) mit einer Durchgangsbohrung (22) des Gehäuses (2) des Haltemoduls (1) ausgebildet ist.

10. Haltemodul (1) nach Anspruch 8, **dadurch gekennzeichnet, dass** der Kopplungsbereich (28) für die Kopplung mit dem Tragelement des Säaggregats (31) als gegenüber einem Gehäuse (2) des Haltemoduls (1) verschwenkbare Strebe (39) ausgebildet ist.

11. Haltemodul (1) nach einem der vorhergehenden Ansprüche, **dadurch gekennzeichnet, dass** das Haltemodul (1) eine Tiefe besitzt, welche kleiner als 40 mm ist.

12. Haltemodul (1) nach einem der vorhergehenden Ansprüche 4 bis 11, **dadurch gekennzeichnet, dass** der Kopplungsbereich (26) für den Antrieb (12) und der Kopplungsbereich (27) für das Einzelkornsägerät (32) einen Abstand (8) besitzen, welcher größer ist als die Summe aus
a) dem Abstand (33) der Achse (7) einer Abtriebswelle (11) des Antriebs (12) von einem Gehäuse (25) des Antriebs (12) und
b) dem Abstand (34) der Achse (6) einer Antriebswelle des Einzelkornsägeräts (32) von einem Gehäuse (35) des Einzelkornsägeräts (32).

13. Haltemodul (1) nach einem der vorhergehenden Ansprüche 4 bis 12, **dadurch gekennzeichnet, dass**
a) der Kopplungsbereich (26) für den Antrieb (12) und/oder
b) der Kopplungsbereich (27) für das Einzelkornsägerät (32)
mit einem Adapter (14) zwecks Anpassung des Kopplungsbereichs (26) an den hiermit zu koppelnden Antrieb (12) oder zwecks Anpassung des Kopplungsbereichs (27) an das hiermit zu koppelnde Einzelkornsägerät (32) gebildet ist.

14. Haltemodul (1) nach einem der vorhergehenden Ansprüche, **dadurch gekennzeichnet, dass** ein Gehäuse (2) des Haltemoduls (1) aus verstärktem Kunststoff hergestellt ist.

15. Verwendung eines Haltemoduls (1) nach einem der vorhergehenden Ansprüche zum alleinigen Halten eines Antriebs (12) für ein Einzelkornsägerät (32) seitlich von dem Einzelkornsägerät (32).

16. Gruppe von Haltemodulen (1) nach mindestens einem der vorhergehenden Ansprüche, **dadurch gekennzeichnet, dass**
a) die Haltemodule (1) mit baugleichen Gehäusen (2) ausgebildet sind,
b) Haltemodule
ba) einer ersten Teilgruppe eine erste Anschlussgeometrie für einen ersten Antrieb oder für ein erstes Einzelkornsägerät ausgestattet sind und
bb) einer zweiten Teilgruppe eine zweite Anschlussgeometrie für einen zweiten Antrieb oder für ein zweites Einzelkornsägerät ausgestattet sind, wobei
c) die erste Anschlussgeometrie von der zweiten Anschlussgeometrie abweicht.

17. Gruppe von Haltemodulen (1) nach mindestens einem der vorhergehenden Ansprüche, **dadurch gekennzeichnet, dass**
a) die Haltemodule mit baugleichen Gehäusen (2) ausgebildet sind,
b) Haltemodule
ba) einer ersten Teilgruppe ein Getriebe mit einer ersten Übersetzung besitzen und
bb) einer zweiten Teilgruppe ein Getriebe mit einer zweiten Übersetzung besitzen,
c) wobei die erste Übersetzung von der zweiten Übersetzung abweicht.

18. Antriebseinheit (30) für ein Einzelkornsägerät (32), **dadurch gekennzeichnet, dass** die Antriebseinheit (30)
a) mit einem Haltemodul (1) nach einem der Ansprüche 1 bis 14 und
b) mit einem elektrischen Antrieb (12)
gebildet ist.

19. Säaggregat (31) mit
a) einem Einzelkornsägerät (32) und
b) einer Antriebseinheit (30) nach Anspruch 18,
c) wobei die Antriebseinheit (30) mit dem Einzelkornsägerät (32) in Antriebsverbindung steht.

## Geänderte Patentansprüche

### Geänderte Patentansprüche gemäss Regel 137(2) EPÜ.

**1.** Haltemodul (1) zum alleinigen Halten eines Antriebs (12) für ein Einzelkornsägerät (32) seitlich von dem Einzelkornsägerät (32), wobei in das Haltemodul (1) ein Getriebe (41) integriert ist, **dadurch gekennzeichnet, dass** das Haltemodul (1) einen Kopplungsbereich (28) für die Kopplung mit einem Tragelement eines Säaggregats (31) besitzt, wobei der Kopplungsbereich (28) für die Kopplung mit dem Tragelement des Säaggregats (31) als Drehmomentstütze (37) ausgebildet ist.

**2.** Haltemodul (1) nach Anspruch 1, **dadurch gekennzeichnet, dass** das Getriebe (41) mit einer einzigen Getriebestufe ausgebildet ist.

**3.** Haltemodul (1) nach Anspruch 1 oder 2, **dadurch gekennzeichnet, dass** das Getriebe (41) mit einem Zahnriementrieb (42) ausgebildet ist.

**4.** Haltemodul (1) nach einem der vorhergehenden Ansprüche, **dadurch gekennzeichnet, dass** das Haltemodul (1)
a) einen Kopplungsbereich (26) für den Antrieb (12) sowie
b) einen Kopplungsbereich (27) für das Einzelkornsägerät (32)
besitzt.

**5.** Haltemodul (1) nach Anspruch 4, **dadurch gekennzeichnet, dass** der Kopplungsbereich (26) für den Antrieb (12) und der Kopplungsbereich (27) für das Einzelkornsägerät (32) von derselben Seite des Haltemoduls (1) zugänglich sind.

**6.** Haltemodul (1) nach einem der vorhergehenden Ansprüche, **dadurch gekennzeichnet, dass** der Kopplungsbereich (28) für die Kopplung mit dem Tragelement des Säaggregats (31) eine Kopplung mit einem verbleibenden Freiheitsgrad bereitstellt, welcher beseitigt ist, wenn der Kopplungsbereich (27) für das Einzelkornsägerät (32) mit dem Einzelkornsägerät (32) gekoppelt ist.

**7.** Haltemodul (1) nach Anspruch 1 oder 6, **dadurch gekennzeichnet, dass** der Kopplungsbereich (28) für die Kopplung mit dem Tragelement des Säaggregats (31) mit einer Durchgangsbohrung (22) des Gehäuses (2) des Haltemoduls (1) ausgebildet ist.

**8.** Haltemodul (1) nach Anspruch 1 oder 6, **dadurch gekennzeichnet, dass** der Kopplungsbereich (28) für die Kopplung mit dem Tragelement des Säaggregats (31) als gegenüber einem Gehäuse (2) des Haltemoduls (1) verschwenkbare Strebe (39) ausgebildet ist.

**9.** Haltemodul (1) nach einem der vorhergehenden Ansprüche, **dadurch gekennzeichnet, dass** das Haltemodul (1) eine Tiefe besitzt, welche kleiner als 40 mm ist.

**10.** Haltemodul (1) nach einem der vorhergehenden Ansprüche 4 bis 9, **dadurch gekennzeichnet, dass** der Kopplungsbereich (26) für den Antrieb (12) und der Kopplungsbereich (27) für das Einzelkornsägerät (32) einen Abstand (8) besitzen, welcher größer ist als die Summe aus
a) dem Abstand (33) der Achse (7) einer Abtriebswelle (11) des Antriebs (12) von einem Gehäuse (25) des Antriebs (12) und
b) dem Abstand (34) der Achse (6) einer Antriebswelle des Einzelkornsägeräts (32) von einem Gehäuse (35) des Einzelkornsägeräts (32).

**11.** Haltemodul (1) nach einem der vorhergehenden Ansprüche 4 bis 10, **dadurch gekennzeichnet, dass**
a) der Kopplungsbereich (26) für den Antrieb (12) und/oder
b) der Kopplungsbereich (27) für das Einzelkornsägerät (32)
mit einem Adapter (14) zwecks Anpassung des Kopplungsbereichs (26) an den hiermit zu koppelnden Antrieb (12) oder zwecks Anpassung des Kopplungsbereichs (27) an das hiermit zu koppelnde Einzelkornsägerät (32) gebildet ist.

**12.** Haltemodul (1) nach einem der vorhergehenden Ansprüche, **dadurch gekennzeichnet, dass** ein Gehäuse (2) des Haltemoduls (1) aus verstärktem Kunststoff hergestellt ist.

**13.** Verwendung eines Haltemoduls (1) nach einem der vorhergehenden Ansprüche zum alleinigen Halten eines Antriebs (12) für ein Einzelkornsägerät (32) seitlich von dem Einzelkornsägerät (32).

**14.** Gruppe von Haltemodulen (1) nach mindestens einem der vorhergehenden Ansprüche, **dadurch gekennzeichnet, dass**
a) die Haltemodule (1) mit baugleichen Gehäusen (2) ausgebildet sind,
b) Haltemodule
ba) einer ersten Teilgruppe eine erste Anschlussgeometrie für einen ersten Antrieb oder für ein erstes Einzelkornsägerät ausgestattet sind und
bb) einer zweiten Teilgruppe eine zweite Anschlussgeometrie für einen zweiten Antrieb oder für ein zweites Einzelkornsägerät ausgestattet sind, wobei
c) die erste Anschlussgeometrie von der zweiten Anschlussgeometrie abweicht.

**15.** Gruppe von Haltemodulen (1) nach mindestens einem der vorhergehenden Ansprüche, **dadurch gekennzeichnet, dass**
a) die Haltemodule mit baugleichen Gehäusen (2) ausgebildet sind,
b) Haltemodule
ba) einer ersten Teilgruppe ein Getriebe mit einer ersten Übersetzung besitzen und
bb) einer zweiten Teilgruppe ein Getriebe mit einer zweiten Übersetzung besitzen,
c) wobei die erste Übersetzung von der zweiten Übersetzung abweicht.

**16.** Antriebseinheit (30) für ein Einzelkornsägerät (32), **dadurch gekennzeichnet, dass** die Antriebseinheit (30)
a) mit einem Haltemodul (1) nach einem der Ansprüche 1 bis 12 und
b) mit einem elektrischen Antrieb (12)
gebildet ist.

**17.** Säaggregat (31) mit
a) einem Einzelkornsägerät (32) und
b) einer Antriebseinheit (30) nach Anspruch 16,
c) wobei die Antriebseinheit (30) mit dem Einzelkornsägerät (32) in Antriebsverbindung steht.
